(19) **Europäisches Patentamt / European Patent Office / Office européen des brevets**

(11) **EP 4 700 690 A1**

(12) **EUROPEAN PATENT APPLICATION**
published in accordance with Art. 153(4) EPC

(43) Date of publication:
**25.02.2026 Bulletin 2026/09**

(21) Application number: **23934014.4**

(22) Date of filing: **18.04.2023**

(51) International Patent Classification (IPC):
**G06Q 50/08** $^{(2012.01)}$ **G06Q 10/04** $^{(2023.01)}$

(52) Cooperative Patent Classification (CPC):
**G06Q 10/04; G06Q 50/08**

(86) International application number:
**PCT/JP2023/015496**

(87) International publication number:
**WO 2024/218868 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Earthbrain Ltd.**
**Tokyo 106-6029 (JP)**

(72) Inventor: **KANOU, Shinya**
**Tokyo 106-6029 (JP)**

(74) Representative: **v. Bezold & Partner**
**Patentanwälte - PartG mbB**
**Ridlerstraße 57**
**80339 München (DE)**

(54) **CONSTRUCTION ZONE DIVISION DEVICE, CONSTRUCTION ZONE DIVISION METHOD, AND PROGRAM**

(57) A construction section division device includes: a planner that plans a soil transportation volume from each cut block of a plurality of cut blocks having a higher height before construction than a height after construction to each fill block of a plurality of fill blocks having a lower height before construction than a height after construction at a construction site divided into a plurality of blocks, by minimizing a workload based on a length of a displacement vector from each cut block to each fill block under a predetermined limiting condition; and a clusterer that performs clustering on the plurality of cut blocks into a first desired number of cut sections, and performs clustering on the plurality of fill blocks into a second desired number of fill sections. The clusterer computes a degree of difference between cut blocks and a degree of difference between fill blocks by using a height before construction of the cut block and the fill block, and a soil transportation vector representing a soil transportation volume and a direction being cut from the cut block and filling the fill block, and performs the clustering, based on the computed degree of difference.

*FIG. 3*

CONSTRUCTION SECTION DIVISION PROCESSING

ACQUIRE PRESENT STATE TOPOGRAPHIC DATA — S101

ACQUIRE DESIGN TOPOGRAPHIC DATA — S102

ACQUIRE NUMBER OF CONSTRUCTION SECTION DIVISIONS — S103

PERFORM MESH DIVISION — S104

GENERATE BLOCK — S105

GENERATE SOIL TRANSPORTATION VECTOR — S106

COMPUTE DEGREE OF DIFFERENCE — S107

PERFORM CONSTRUCTION SECTION DIVISION — S108

END

EP 4 700 690 A1

# Description

Technical Field

The present disclosure relates to a construction section division device, a construction section division method, and a program.

Background Art

When a construction plan of land preparation works is created, soil volume calculation of cut soil and fill soil at a construction site is performed, and a soil volume distribution plan for distributing a soil volume to an appropriate place is made. When the soil volume distribution plan is made, construction section division is performed on a cut section where cutting is performed and a fill section where filling is performed.

Patent Literature 1 discloses that a region is divided into a plurality of element regions having a cut attribute or a fill attribute, based on present state topography and target topography, the element regions being adjacent to each other and having the cut attribute are put into a group and generated as a cut region, and the element regions being adjacent to each other and having the fill attribute are put into a group and generated as a fill region, or, furthermore, a cut region or a fill region is freely divided to generate a new cut region or a new fill region, and a construction soil volume of each cut region and a construction soil volume of each fill region are computed.

Citation List

Patent Literature

Patent Literature 1: Unexamined Japanese Patent Application Publication No. 2021-101316

Summary of Invention

Technical Problem

In construction section division, for example, when there is a boundary place where a direction of soil transportation to a fill section in a cut section is two different directions, division of the cut section may be performed at the boundary. However, when division of the cut section is performed at the boundary, work of cutting and soil transportation of one of the divided cut sections and work of cutting and soil transportation of the other cut section are separately performed. In this case, a difference occurs in a soil transportation volume due to a difference in progress of the work and the like. Herein, when a cut height of the boundary portion is great, only one of the cut sections is cut and the other adjacent cut section is not cut, and thus an elevation difference may occur in the boundary portion. When cutting of the other cut section is performed, a work vehicle needs to move to a position at a high elevation and perform cut work and fill work again, and work efficiency is not good.

The present disclosure has been made in view of the circumstance described above, and an objective is to perform appropriate construction section division in order to create a soil volume distribution plan.

Solution to Problem

In order to achieve the objective described above, a construction section division device according to the present disclosure includes:

a planner that plans a soil transportation volume from each cut block of a plurality of cut blocks having a higher height before construction than a height after construction to each fill block of a plurality of fill blocks having a lower height before construction than a height after construction at a construction site divided into a plurality of blocks, by minimizing a workload based on a length of a displacement vector from the each cut block to the each fill block under a predetermined limiting condition; and
a clusterer that performs clustering on the plurality of cut blocks into a first desired number of cut sections, and performs clustering on the plurality of fill blocks into a second desired number of fill sections, wherein the clusterer

computes a degree of difference between cut blocks and a degree of difference between fill blocks by using a height before construction of the cut block and the fill block, and a soil transportation vector representing a soil transportation volume and a direction being cut from the cut block and filling the fill block, and performs the clustering, based on the computed degree of difference.

Advantageous Effects of Invention

According to the present disclosure, clustering into a cut section and a fill section is performed based on a degree of difference computed by using a height before construction of a cut block and a fill block, and thus appropriate construction section division can be performed in order to create a soil volume distribution plan.

Brief Description of Drawings

FIG. 1 is a diagram illustrating a functional configuration of a construction section division device according to an embodiment of the present disclosure;
FIG. 2 is a diagram illustrating a hardware configuration of the construction section division device according to the embodiment of the present disclosure;

FIG. 3 is a flowchart illustrating motions of construction section division processing according to the embodiment of the present disclosure;

FIG. 4A is a diagram illustrating a state where a construction site is divided into a plurality of meshes;

FIG. 4B is a diagram illustrating a state where the plurality of meshes acquired by dividing the construction site are classified into a cut mesh or a fill mesh;

FIG. 5A is a diagram illustrating a state where the construction site is divided into a plurality of cut blocks and fill blocks;

FIG. 5B is a diagram illustrating an example of a soil transportation vector;

FIG. 6 is a diagram illustrating an example of computation of a degree of difference;

FIG. 7A is a diagram illustrating an example of a process of aggregating the cut blocks and the fill blocks, based on the degree of difference; and

FIG. 7B is a diagram illustrating an example of a state where construction section division is performed.

Description of Embodiments

Hereinafter, a construction section division device according to an embodiment of the present disclosure is described in detail with reference to drawings.

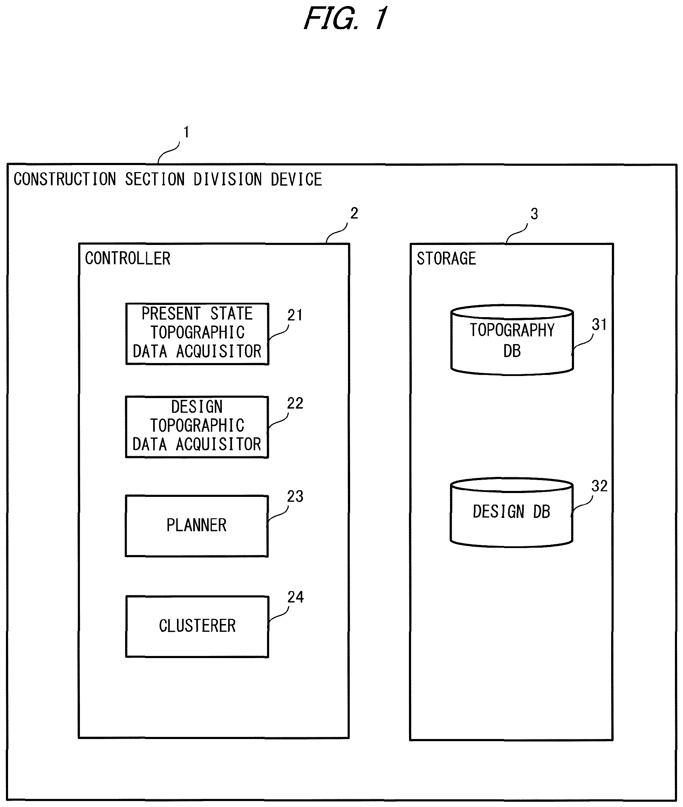

As illustrated in FIG. 1, a construction section division device 1 includes a controller 2 and a storage 3. The controller 2 includes a present state topographic data acquisitor 21 that acquires topographic data indicating present state topography before construction of a construction site for land preparation, a design topographic data acquisitor 22 that acquires topographic data indicating design topography of the construction site for land preparation, a planner 23 that plans a soil transportation volume from a plurality of cut blocks to a plurality of fill blocks, and a clusterer 24 that performs clustering on the plurality of cut blocks and the plurality of fill blocks into a cut section and a fill section.

The present state topographic data acquisitor 21 reads, from a topography database (DB) 31 described below, two-dimensional or three-dimensional topographic data indicating present state topography before preparation of a scheduled preparation site, and acquires necessary present state topographic data. The present state topographic data are used for calculating a cut volume and a fill volume, and deciding a cut block and a fill block.

The design topographic data acquisitor 22 reads, from a design database (DB) 32 described below, two-dimensional or three-dimensional drawing data indicating a final design surface of the scheduled preparation site, and acquires necessary design topographic data. The design topographic data are used together with the present state topographic data for calculating a cut volume and a fill volume, and deciding a cut block and a fill block.

The planner 23 obtains an optimum combination of a cut block from which cut soil is transported and a fill block from a plurality of cut blocks and fill blocks. Specifically, the planner 23 divides a construction site into meshes, based on the present state topographic data and the design topographic data, and breaks down each mesh into a cut element or a fill element. The planner 23 generates the cut block and the fill block by gathering a cut mesh and a fill mesh that are broken down into the cut element or the fill element, calculates a workload for each block from a distance from the cut block to the fill block and a transportation volume of soil and sand, and performs soil volume distribution in such a way as to minimize the workload.

The clusterer 24 generates a cut section by grouping the plurality of cut blocks, generates a fill section by grouping the plurality of fill blocks, and performs clustering on the construction site into the cut section and the fill section. Specifically, the clusterer 24 computes, for the plurality of cut blocks and the plurality of fill blocks, a degree of difference between the cut blocks and between the fill blocks, and performs clustering on the cut blocks and the fill blocks into the cut section and the fill section, based on a computation result. The degree of difference is computed based on a distance between blocks that are between the cut blocks and between the fill blocks, a vector length and a direction (inner product) of a soil transportation vector representing a soil transportation volume and a direction being transported from the cut block to the fill block, and a height of the block.

The storage 3 includes the topography DB 31 and the design DB 32. The topography DB 31 is a database in which the present state topographic data are stored. The design DB 32 is a database in which the design topographic data are stored.

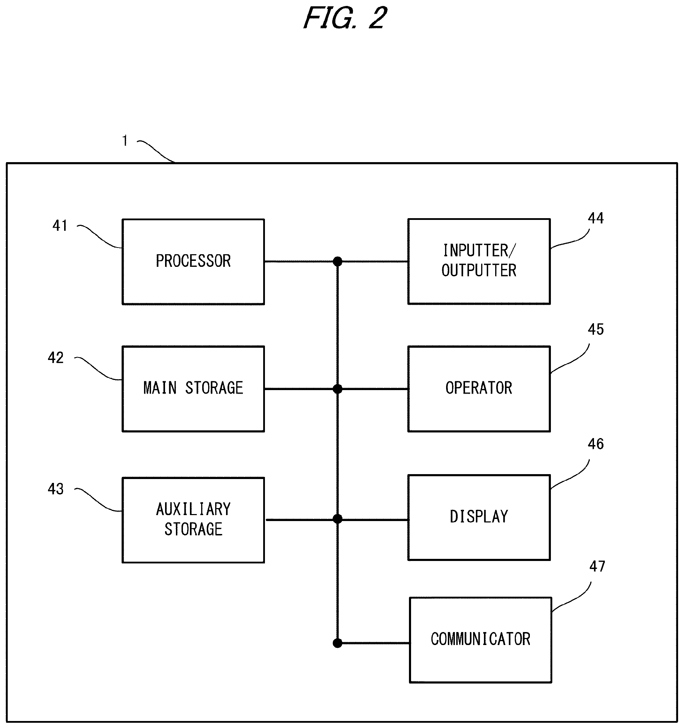

As illustrated in FIG. 2, in terms of hardware, the construction section division device 1 includes a processor 41 that processes data according to a control program, a main storage 42 that functions as a work area of the processor, an auxiliary storage 43 for storing data for a long period of time, an inputter/outputter 44 that accepts a data input and also outputs data, an operator 45, a display 46, a communicator 47 that communicates with another device, and a bus that connects the elements to one another. The auxiliary storage 43 stores the control program executed by the processor 41. The operator 45 is a device that inputs various instructions to the controller 2, and includes a keyboard, an operation button, and the like. The display 46 displays a screen of an execution result of various types of processing, an operation screen, and the like. By reading the program stored in the auxiliary storage 43 into the main storage 42 and executing the program, the processor 41 functions as the present state topographic data acquisitor 21, the design topographic data acquisitor 22, the planner 23, and the clusterer 24 illustrated in FIG. 1.

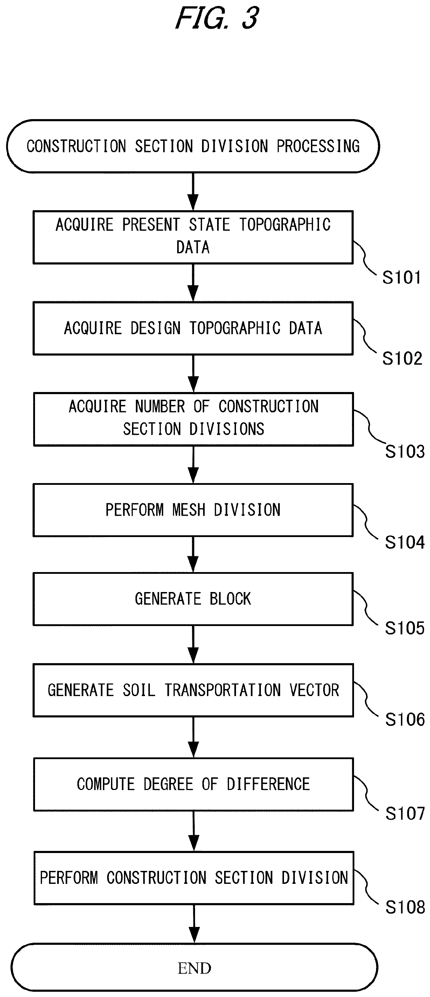

FIG. 3 is a flowchart illustrating construction section division processing. As illustrated in FIG. 3, in step S101, the present state topographic data acquisitor 21 of the controller 2 accesses the topography DB 31 of the storage 3, and acquires present state topographic data of a site where land preparation is to be performed. Next, in step S102, the design topographic data acquisitor 22 of the controller 2 accesses the design DB 32 of the storage 3, and acquires design topographic data of the site. Next, in step S103, the controller 2 acquires the number of construction section divisions by an input from the operator 45 by a user. The construction sections are divided into a cut section being a region where cutting is performed and a fill section being a region where filling is performed. By the user inputting a desired numerical value for each of the cut section and the fill section, the cut section and the fill section according to the input numerical value are generated. When the construction sections are generated, a soil transportation volume between the construction sections is calculated, and a soil volume distribution plan is generated. When the present state topographic data and the design topographic data are acquired, the planner 23 of the controller 2 performs mesh division on present state topography (step S104).

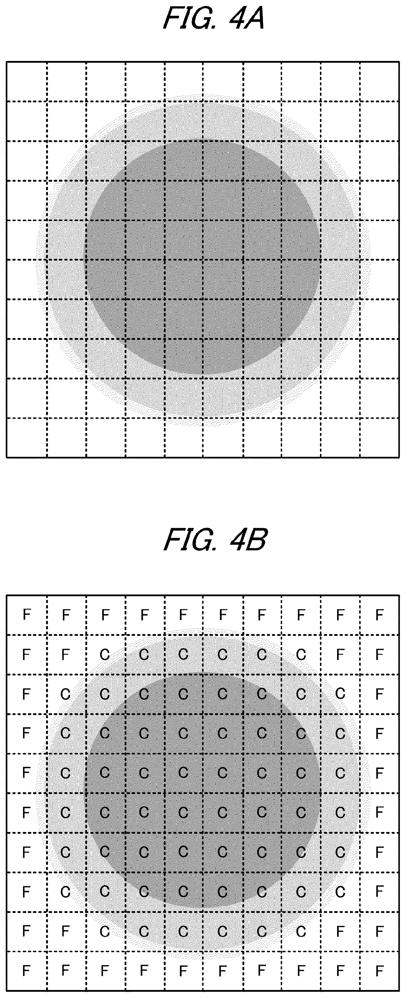

FIG. 4A illustrates a state where present state topography of a construction site is divided into a plurality of meshes. The mesh has, for example, a square shape. Note that the mesh may have, for example, another shape such as a triangle and a hexagon. The mesh having the square shape is assumed to have a side of 10 m. However, the present disclosure is not limited to this.

When division into the plurality of meshes is performed, soil volumes of cut soil and fill soil are calculated for each of the meshes. The planner 23 of the controller 2 compares present state topographic data with design topographic data. There are places where a height of the present state topography being a height before construction is high with respect to a height of design topography being a height after construction, and there are also places where the height is low. The place where the height is high requires cutting of the portion, and the place where the height is low requires filling of the portion. The planner 23 determines whether cutting is required or filling is required for each of the meshes, and identifies the mesh requiring cutting as a cut mesh, and identifies the mesh requiring filling as a fill mesh. Further, a cut volume is computed for the cut mesh, and a fill volume is computed for the fill mesh. FIG. 4B illustrates a state where the plurality of meshes are classified into the cut mesh or the fill mesh. Herein, the cut mesh is provided with a reference sign C, and the fill mesh is provided with a reference sign F.

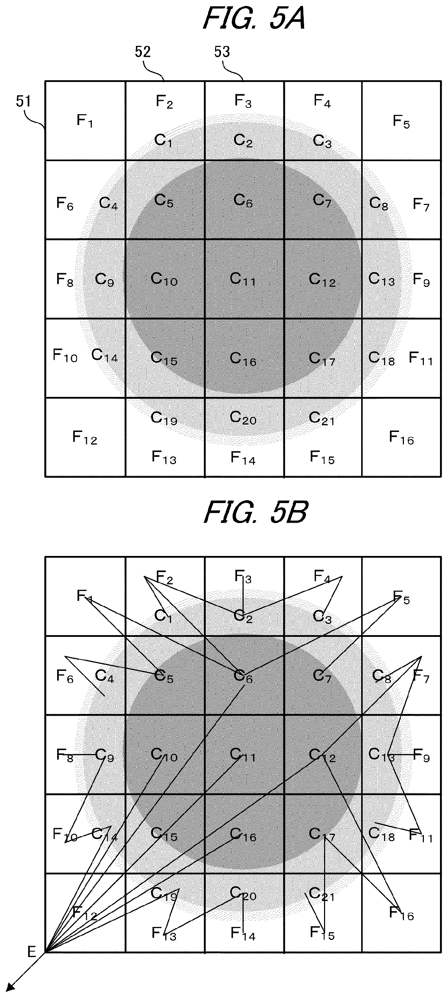

Returning to FIG. 3, when mesh division is performed in step S104, the planner 23 of the controller 2 puts together the plurality of cut meshes and the plurality of fill meshes, and generates a cut block and a fill block (step S105). FIG. 5A illustrates a state where the construction site is divided into the plurality of cut blocks and the plurality of fill blocks. As illustrated in FIG. 5A, four adjacent meshes of two meshes long and two meshes wide are grouped, and one block is generated. The generated block has an attribute identified by an attribute of the meshes constituting the block. In an upper left block 51 in FIG. 5A, meshes constituting the block are all the fill meshes from FIG. 4B, and thus an attribute of the block is identified as the fill block. Further, in a block 52, two upper meshes are the fill meshes and two lower meshes are the cut meshes among the meshes constituting the block, and thus the block is identified as the fill block and also the cut block. Further, in a block 53 similarly to the block 52, two upper meshes are the fill meshes and two lower meshes are the cut meshes among the meshes constituting the block, and thus the block is identified as the fill block and also the cut block. As described above, when an attribute of the other block is also identified, the number of the cut blocks is 21 blocks and the number of the fill blocks is 16 blocks in the example in FIG. 5A. In FIG. 5A, the cut block is provided with a reference sign C, and the fill block is provided with a reference sign F. A block being the cut block and also the fill block is provided with both of the reference sign C and the reference sign F.

When the block is generated, a soil transportation vector is obtained in step S106. The soil transportation vector is a vector representing a soil transportation volume and a direction being cut from the cut block and being filled on the fill block. The planner 23 obtains an optimum combination from the plurality of cut blocks and the plurality of fill blocks with regard to transportation of soil and sand from which cut block to which fill block.

Specifically, a minimum value of an objective function is obtained for the soil transportation vector under predetermined limiting conditions. The objective function is a product of a distance in which soil and sand are transported in a combination of the cut block and the fill block and a soil volume to be transported in each combination, that is, a workload. Herein, the distance between the blocks is a direct distance. Note that the distance may be a distance in consideration of a slope.

The workload is defined as

$$\sum_{i=1}^{N}\sum_{j=1}^{M}V_{i,j}L_{i,j}$$

from a soil transportation volume $V_{i,j} \geq 0$ from a cut block $C_i$ ($i$ = 1, 2, ..., N) to a fill block $F_j$ ($j$ = 1, 2, ..., M), and
a length $L_{i,j} = |d(C_i, F_j)|$ of a displacement vector $d(C_i, F_j)$ from the cut block $C_i$ to the fill block $F_j$.

Further, the following conditions are set as the predetermined limiting conditions.

(1) A difference between cutting and filling of a certain cut block = a total soil volume to be transported from the cut block

(2) A difference between cutting and filling of a certain fill block = a total soil volume to be transported to the fill block

(3) A total soil volume collected at each entrance = a total soil volume in a construction section having a positive or negative sign reversed

(4) A total soil volume exchanged between each entrance and a certain stock pile = a total soil volume of the stock pile

The condition of (1) is set for preventing transported soil from being carried into a cut block. Some cut blocks may include the fill mesh requiring filling in addition to the cut mesh requiring cutting. Herein, filling to the fill mesh is assumed to be achieved by using soil and sand excavated from the cut mesh in the block instead of carrying transported soil from a different cut block from the block. Therefore, transported soil is not carried into the cut block from the other cut block.

The condition of (2) is set for preventing transported soil from being carried out of a fill block. Some fill blocks may include the cut mesh requiring cutting in addition to the fill mesh requiring filling. Herein, cut soil excavated from the cut mesh is assumed to be achieved by filling to the fill mesh in the block instead of carrying the cut soil as transported soil to a different block from the block. Therefore, transported soil is not carried out of the fill block into the other fill block.

An optimum soil transportation vector of the cut block and the fill block being optimized in such a way as to minimize a soil volume and a distance is obtained under the limiting conditions described above. FIG. 5B illustrates an example of the soil transportation vector obtained in such a manner. A line from the cut block toward the fill block indicates the soil transportation vector. For example, a cut block $C_5$ has a line toward fill blocks $F_1$ and $F_6$. In other words, soil and sand excavated in the cut block $C_5$ are transported to the fill blocks $F_1$ and $F_6$. Further, soil and sand excavated in a cut block $C_6$ are transported to the fill block $F_1$ and fill blocks $F_2$ and $F_5$. Furthermore, soil and sand excavated in the cut block $C_6$ head to an entrance E. The example in FIG. 5B indicates a state where a total cut volume of the construction site is greater than a total fill volume. Soil and sand collected at the entrance E are transported to the outside. Further, a cut block $C_1$ includes the fill mesh in addition to the cut mesh in the block, and is also the fill block $F_2$. Herein, by the limiting condition (1) described above, soil and sand excavated from the cut mesh of the cut block $C_1$ preferentially fill the fill mesh of the fill block $F_2$. A line from the cut block $C_1$ toward the fill block $F_2$ indicates the soil transportation vector in which cutting and filling of soil and sand are performed in the same block. A fill volume required in the fill block $F_2$ is greater than a cut volume excavated from the cut block $C_1$, and thus cut soil excavated from a cut block $C_2$ and the cut block $C_6$ is also carried into the fill block $F_2$.

When the soil transportation vector is obtained, a degree of difference between the cut blocks and between the fill blocks is computed in step S107. The degree of difference between the cut blocks and between the fill blocks is computed by using a height before construction of the cut block and the fill block, and a soil transportation vector representing a soil transportation volume and a direction being cut from the cut block and filling the fill block.

A degree of difference Dif $(X_i, X_j)$ between cut blocks and fill blocks $X_i$ and $X_j$ is obtained by the following equation.

$$\mathrm{Dif}(X_i, X_j) = d_{ij} - \alpha * d\theta_{ij} + \beta * \max(h_i, h_j)$$

Herein, $d_{ij}$ indicates a distance between the blocks. The distance may be a direct distance between the blocks, and may be a distance in consideration of a slope. $d\theta_{ij}$ indicates a degree of cosine similarity of a vector. $\max(h_i, h_j)$ indicates a height of a higher block. The values described above are normalized. $\alpha$ and $\beta$ are a weight, and which element is provided with a greater weight is appropriately set by the user. The degree of difference is set as a determination reference for setting a cut section and a fill section by gathering cut blocks and fill blocks. When the degree of difference between the blocks is small, that is, the degree of similarity between the blocks is great, it is efficient to perform cut work or fill work by gathering the blocks in one. Therefore, when the degree of difference is small, the blocks are aggregated. In contrast, when the degree of difference between the blocks is great, that is, the degree of similarity between the blocks is small, the blocks are less related and have little need to perform cut work or fill work as one. Therefore, when the degree of difference is great, the blocks are not aggregated.

A distance between the cut block $C_i$ and a cut block $C_k$ ($k = 1, 2, ..., N$) is defined as a length $|d(C_i, C_k)|$ of a displacement vector $d(C_i, C_k)$ from the cut block $C_i$ to the cut block $C_k$. Further, a distance between the fill block $F_j$ and a fill block $F_h$ ($h = 1, 2, ..., M$) is defined as a length $|d(F_j, F_h)|$ of a displacement vector $d(F_j, F_h)$ from the fill block $F_j$ to the fill block $F_h$.

A distance between blocks is an element of computation of the degree of difference. When the distance is short, the blocks are located in close positions, and it is efficient to perform cut work or fill work by gathering the blocks as one region. Further, when the blocks are treated as one region, a place of a region requiring cutting and a place of a region requiring filling in the entire construction site are more easily recognized, and a flow of soil transportation between regions and a soil transportation volume are more easily planned. Further, when the distance between the blocks is great, the blocks are located in separated positions, and cut work or fill work may be performed in each of the blocks and the blocks may not be gathered as one region.

A degree of cosine similarity of a vector is also an element of computation of the degree of difference. The degree of cosine similarity is an indicator representing a degree that two soil transportation vectors are directed in the same direction, that is, a scale representing similarity of how much two soil transportation vectors are similar. When the degree of cosine similarity is close to 1, the vectors are similar. When the degree is close to -1, the vectors are not similar. In other words, a difference in direction between the soil transportation vectors is computed by reversing a positive or negative sign of the degree of cosine similarity between the soil transportation vectors.

A soil transportation vector of the cut block $C_i$ is defined as follows.

$$c_i = \Sigma_{j=1}^M V_{i,j} \, d(C_i, F_j)$$

Further, a soil transportation vector of the fill block $F_j$ is defined as follows.

$$f_j = \Sigma_{i=1}^N V_{i,j} \, d(C_i, F_j)$$

When the degree of cosine similarity is great, that is, a difference in direction between the soil transportation vectors is small, the blocks have close directions in which soil transportation is performed, and it is efficient to perform cut work or fill work by gathering the blocks as one region. Further, when the blocks are treated as one region, a cut region and a fill region in the entire construction site are more easily recognized, and a flow of soil transportation between regions and a soil transportation volume are more easily planned. Further, when the degree of cosine similarity is small, that is, a difference in direction between the soil transportation vectors is great, the blocks have separated directions in which soil transportation is performed, and cut work or fill work may be performed in each of the blocks and the blocks may not be gathered as one region.

As an element of computation of the degree of difference between the cut blocks and between the fill blocks, an evaluation value of a height before construction between the blocks is further added. For example, when an elevation of present state topography before construction is high in the cut block, work of cutting and soil transportation requires time and effort. Further, in the presence of a block having a high elevation with respect to surrounding cut blocks, even when the block having the high elevation is desired to be passed as a path for carrying soil and sand cut from the surrounding cut blocks, the path has a great height difference, and thus the path may need to be avoided and a detour having a smaller height difference may need to be selected. Since protrusion of the block having the high elevation with respect to the surrounding blocks is a hindrance to work efficiency, cut work needs to be promptly performed. Thus, when an elevation difference from the surrounding blocks is eliminated by performing work on the block having the high elevation separately from the surrounding blocks, work can be then performed integrally with the surrounding blocks, and efficiency is better. Therefore, the degree of difference is computed according to the evaluation value of the height before construction.

In the computation equation of the degree of difference described above, the height $max(h_i, h_j)$ of the higher block is indicated as an evaluation value of a height before construction between the blocks. This compares an elevation $h_i$ of one of the blocks with an elevation $h_j$ of the other block, and a higher elevation is computed. For example, when $h_i > h_j$, $max(h_i, h_j) = h_i$. The elevation being the height before construction can be set as an elevation difference between a height of present state topography before construction and design topography after construction. As described above, the blocks are set flat as a whole while avoiding protrusion of the block having the high elevation, and thus the degree of difference is greater as the evaluation value of the height before construction is higher.

Note that, as the evaluation value of the height before construction between the blocks, a sum, a product, and the like of heights of both of the blocks can be used in addition to the height $max(h_i, h_j)$ of the higher block. As described above, when an elevation of a nearby block is low, it is highly efficient to perform work integrally, and thus the blocks may be gathered as one. Therefore, as the sum or the product of the heights of both of the blocks is smaller, it is computed that a degree of similarity is higher, that is, the degree of difference is lower.

The evaluation value is generalized as follows in such a way as to also include the sum, the product, and the like of the heights of both of the blocks in the evaluation value of the height before construction between the blocks.

In other words, by a height before construction $H(X)$ of cut and fill blocks X, and a bivariate function $p(\cdot, \cdot)$ in which the commutative law holds true for an argument and that monotonously increases with respect to the argument, an evaluation value of a height before construction of the cut block $C_i$, $C_k$ is defined as $p(H(C_i), H(C_k))$. Further, an evaluation value of a height before construction of the fill block $F_j$, $F_h$ is defined as $p(H(F_j), H(F_h))$.

Herein, the bivariate function $p(\cdot, \cdot)$ is any of the followings.

$$p(a, b) = max(a, b);$$

$$p(a, b) = a + b;$$

$$p(a, b) = ab;$$

$$p(a, b) = (ab)^{1/2};$$

$$p(a, b) = a^2 + b^2;$$

$$p(a, b) = (a^2 + b^2)^{1/2};$$

By the elements described above, the degree of difference between the cut blocks and between the fill blocks is computed. A degree of difference between blocks of a plurality of blocks is greater with a longer distance between the blocks, is greater with a greater difference in direction between soil transportation vectors of the blocks, and is greater with a higher evaluation value of a height before construction of the blocks.

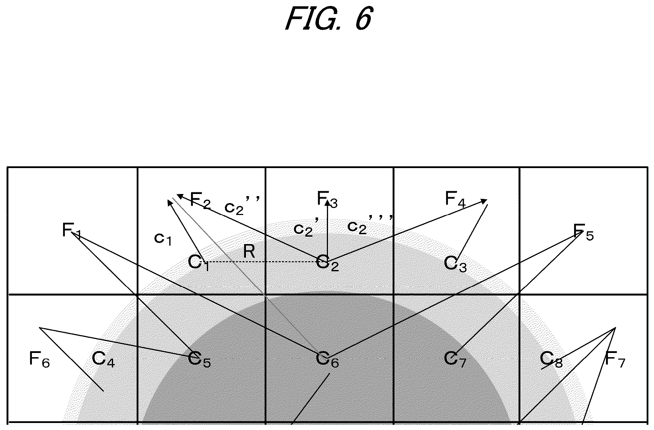

Next, an example of computation of a degree of difference is described by using FIG. 6. FIG. 6 is a diagram illustrating 10 blocks from the top among the blocks illustrated in FIG. 5B. Herein, an example of computing a degree of difference between the cut block $C_1$ and the cut block $C_2$ is indicated. There is a soil transportation vector $c_1$ from the cut block $C_1$ toward the fill block $F_2$ being the same block. Soil and sand cut from the cut block $C_1$ are transported only to the fill block $F_2$. From the cut block $C_2$ adjacent to the cut block $C_1$, there are a soil transportation vector $c_2'$ to a fill block $F_3$ being the same block, and a soil transportation vector $c_2''$ to the fill block $F_2$, and a soil transportation vector $c_2'''$ to a fill block $F_4$. A distance $d_{12}$ between the cut block $C_1$ and the cut block $C_2$ is R. For a degree of cosine similarity between the vectors, a degree of cosine similarity $d\theta_{12}$ between the soil transportation vector $c_1$ extending from the cut block $C_1$ and a soil transportation vector $C_2$ extending from the cut block $C_2$ is obtained. Herein, the soil transportation vector $C_2$ is a sum of the soil transportation vectors $c_2'$, $c_2''$, and $c_2'''$ ($c_2' + c_2'' + c_2'''$). A height before construction of the cut block $C_1$ is $h_1$. Further, a height before construction of the cut block $C_2$ is $h_2$.

A degree of difference Dif ($C_1$, $C_2$) between the cut blocks $C_1$ and $C_2$ is obtained by the following equation.

$$\mathrm{Dif}(C_1, C_2) = d_{12} - \alpha * d\theta_{12} + \beta * \max(h_1, h_2)$$

Returning to FIG. 3, when the degree of difference is computed for all of the soil transportation vectors in step S107, construction section division is performed (step S108). In step S108, the clusterer 24 divides a construction section, based on the number of construction section divisions acquired in step S103 and the computed degree of difference. The number of construction section divisions is the number of cut sections and the number of fill sections being input by the user. The clusterer 24 performs clustering by aggregating the cut blocks and aggregating the fill blocks in ascending order of the computed degree of difference. For clustering, aggregation of the cut blocks is performed in such a way as to set the number of cut sections input by the user for the cut sections, and aggregation of the fill blocks is performed in such a way as to set the number of fill sections input by the user for the fill sections.

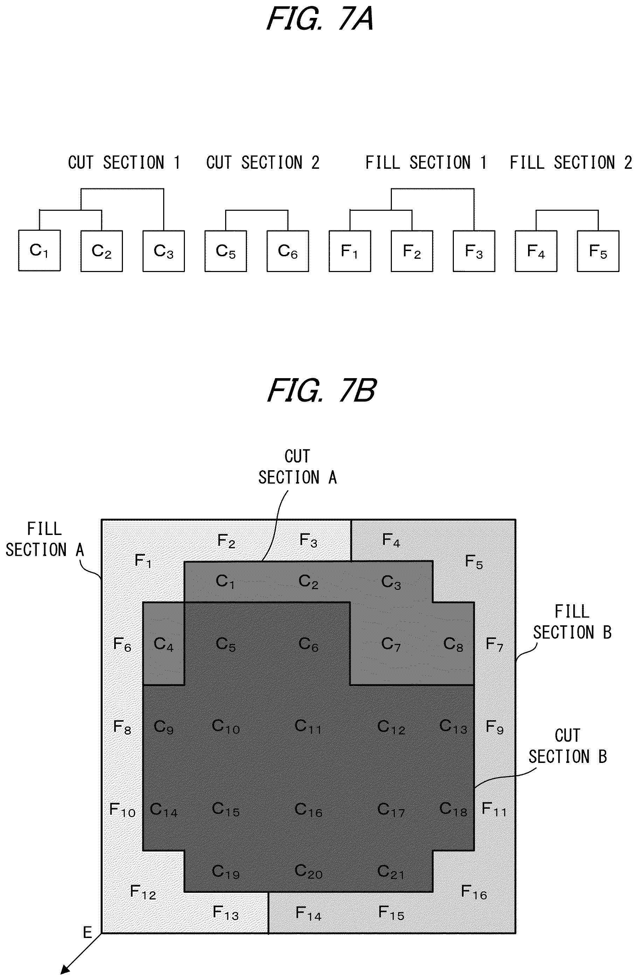

FIG. 7A illustrates an example of a process of aggregating the cut blocks and the fill blocks, based on the degree of difference. Herein, as the number of construction section divisions, it is assumed that a cut section is divided into two and a fill section is divided into two. First, clustering is performed for the cut sections. Computed degrees of difference between the cut blocks are arranged in ascending order. As a result of arranging the degrees of difference in ascending order, it is assumed that the following is acquired.

$$\mathrm{Dif}(C_5, C_6) < \mathrm{Dif}(C_1, C_2) < \mathrm{Dif}(C_2, C_3)...$$

Next, the cut blocks are aggregated in ascending order of the degree of difference. First, the cut blocks $C_5$ and $C_6$ having a smallest degree of difference are aggregated. Next, the cut blocks $C_1$ and $C_2$ having a second smallest degree of difference are aggregated, and a different group from the cut blocks $C_5$ and $C_6$ is created. Then, for a combination of the cut blocks $C_2$ and $C_3$ having a third smallest degree of difference, the cut block $C_2$ is already aggregated with the cut block $C_1$, and thus the cut block $C_3$ is aggregated with the group of the aggregated cut blocks $C_1$ and $C_2$. Hereinafter, aggregation in ascending order of the degree of difference is repeated for the other cut blocks. Note that FIG. 7A does not illustrate description of a block after the cut block $C_6$. Then, in the end, a group including the cut blocks $C_1$, $C_2$, and $C_3$ is generated as a cut section A. Further, a group including the cut blocks $C_5$ and $C_6$ is generated as a cut section B.

Next, clustering is performed for the fill sections. Computed degrees of difference between the fill blocks are arranged in ascending order. As a result of arranging the degrees of difference in ascending order, it is assumed that the following is acquired.

$$\mathrm{Dif}(F_4, F_5) < \mathrm{Dif}(F_1, F_2) < \mathrm{Dif}(F_2, F_3)...$$

Next, the fill blocks are aggregated in ascending order of the degree of difference. First, the fill blocks $F_4$ and $F_5$ having a smallest degree of difference are aggregated. Next, the fill blocks $F_1$ and $F_2$ having a second smallest degree of difference are aggregated, and a different group from the fill blocks $F_4$ and $F_5$ is created. Then, for a combination of the fill blocks $F_2$ and $F_3$ having a third smallest degree of difference, the fill block $F_2$ is already aggregated with the fill block $F_1$, and thus the fill block $F_3$ is aggregated with the group of the aggregated fill blocks $F_1$ and $F_2$. Hereinafter, aggregation in ascending order of the degree of difference is repeated for the other fill blocks. Note that FIG. 7A does not illustrate description of a block after the fill block $F_5$. Then, in the end, a group including the fill blocks $F_1$, $F_2$, and $F_3$ is

generated as a fill section A. Further, a group including the fill blocks $F_4$ and $F_5$ is generated as a fill section B.

FIG. 7B illustrates an example of a state where construction section division is performed. The construction site is divided into two of the cut section A and the cut section B as the cut sections. Further, the construction site is divided into two of the fill section A and the fill section B as the fill sections. Herein, a block that is the cut block and also the fill block, for example, the cut blocks $C_1$, $C_2$, and $C_3$ and the fill blocks $F_2$, $F_3$, and $F_4$ are divided by a boundary between the cut section and the fill section in units of the cut mesh and the fill mesh in the block. In this way, the construction site can be divided into the number of the construction sections designated by the user.

Further, the function of the construction section division device can be achieved by dedicated hardware and also a normal computer system.

For example, the device that executes the processing described above can be constituted by storing and distributing a program executed by the processor 41 into a non-transitory computer-readable recording medium, and installing the program on a computer. For example, a flexible disk, a compact disc read-only memory (CD-ROM), a digital versatile disc (DVD), and a magneto-optical disc (MO) are conceivable as such a recording medium.

Further, the program may be stored in advance in a disk device included in a server device on a communication network typified by the Internet, be superimposed on, for example, a carrier wave, and be downloaded to the computer.

Further, the processing described above can also be achieved by activating and executing the program while transferring the program via the communication network.

Furthermore, the processing described above can also be achieved by executing a whole or a part of the program on the server device, and executing the program while transmitting and receiving information about the processing by the computer via the communication network.

Note that, when the function described above is achieved by being shared with an operating system (OS), when the function described above is achieved in cooperation between the OS and an application, or the like, only a portion other than the OS may be stored and distributed into a medium, and may also be downloaded to the computer.

Further, means for achieving the function of the construction section division device may be achieved by not only software, and may also be partially or entirely achieved by dedicated hardware including a circuit.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Industrial Applicability

The present disclosure can be widely applied to a construction section division device that divides a construction section of a construction site and uses the divided construction sections for a soil volume distribution plan.

Reference Signs List

| | |
|---|---|
| 1 | Construction section division device |
| 2 | Controller |
| 3 | Storage |
| 21 | Present state topographic data acquisitor |
| 22 | Design topographic data acquisitor |
| 23 | Planner |
| 24 | Clusterer |
| 31 | Topography DB |
| 32 | Design DB |
| 41 | Processor |
| 42 | Main storage |
| 43 | Auxiliary storage |
| 44 | Inputter/outputter |
| 45 | Operator |
| 46 | Display |
| 47 | Communicator |
| 51, 52, 53 | Block |
| E | Entrance |

**Claims**

**1.** A construction section division device comprising:

a planner that plans a soil transportation volume from each cut block of a plurality of cut blocks having a higher height before construction than a height after construction to each fill block of a plurality of fill blocks having a lower height before construction than a height after construction at a construction site divided into a plurality of blocks, by minimizing a workload based on a length of a displacement vector from the each cut block to the each fill block under a predetermined limiting condition; and
a clusterer that performs clustering on the plurality of cut blocks into a first desired number of cut sections, and performs clustering on the plurality of fill blocks into a second desired number of fill sections, wherein the clusterer

> computes a degree of difference between cut blocks and a degree of difference between fill blocks by using a height before construction of the cut block and the fill block, and a soil transportation vector representing a soil transportation volume and a direction being cut from the cut block and filling the fill block, and
> performs the clustering, based on the computed degree of difference.

2. The construction section division device according to claim 1, wherein a degree of difference between blocks of the plurality of blocks

> is greater with a longer distance between the blocks,
> is greater with a greater difference in direction between soil transportation vectors of the blocks, and
> is greater with a higher evaluation value of a height before construction of the blocks.

3. The construction section division device according to claim 2, wherein the clusterer performs the clustering by aggregating the cut blocks and aggregating the fill blocks in ascending order of the computed degree of difference.

4. The construction section division device according to claim 2, wherein the workload is defined as

$$\Sigma_{i=1}{}^{N}\Sigma_{j=1}{}^{M}V_{i,j}L_{i,j}$$

> from a soil transportation volume $V_{i,j} \geq 0$ from a cut block $C_i$ ($i = 1, 2, ..., N$) to a fill block $F_j$ ($j = 1, 2, ..., M$), and
> a length $L_{i,j} = |d(C_i, F_j)|$ of a displacement vector $d(C_i, F_j)$ from the cut block $C_i$ to the fill block $F_j$.

5. The construction section division device according to claim 4, wherein

> a soil transportation vector of the cut block $C_i$ is defined as

$$c_i = \Sigma_{j=1}{}^{M}V_{i,j}\, d(C_i, F_j),$$

> a soil transportation vector of the fill block $F_j$ is defined as

$$f_j = \Sigma_{i=1}{}^{N}V_{i,j}\, d(C_i, F_j),$$

and
a difference in direction between soil transportation vectors is computed by reversing a positive or negative sign of a degree of cosine similarity between the soil transportation vectors.

6. The construction section division device according to claim 4, wherein

> a distance between the cut block $C_i$ and a cut block $C_k$ ($k = 1, 2, ..., N$) is defined as a length $|d(C_i, C_k)|$ of a displacement vector $d(C_i, C_k)$ from the cut block $C_i$ to the cut block $C_k$, and
> a distance between the fill block $F_j$ and a fill block $F_h$ ($h = 1, 2, ..., M$) is defined as a length $|d(F_j, F_h)|$ of a displacement vector $d(F_j, F_h)$ from the fill block $F_j$ to the fill block $F_h$.

7. The construction section division device according to claim 6, wherein,

> by a height before construction $H(X)$ of cut and fill blocks $X$, and a bivariate function $p(\cdot, \cdot)$ in which the commutative law holds true for an argument and that monotonously increases with respect to the argument,
> an evaluation value of a height before construction of the cut block $C_i$, $C_k$ is defined as $p(H(C_i), H(C_k))$, and
> an evaluation value of a height before construction of the fill block $F_j$, $F_h$ is defined as $p(H(F_j), H(F_h))$.

8. The construction section division device according to claim 7, wherein the bivariate function $p(\cdot, \cdot)$ is any of

$$p(a, b) = \max(a, b);$$

$$p(a, b) = a + b;$$

$$p(a, b) = ab;$$

$$p(a, b) = (ab)^{1/2};$$

$$p(a, b) = a^2 + b^2;$$

and

$$p(a, b) = (a^2 + b^2)^{1/2}.$$

**9.** A construction section division method comprising:

a planning step of planning a soil transportation volume from each cut block of a plurality of cut blocks having a higher height before construction than a height after construction to each fill block of a plurality of fill blocks having a lower height before construction than a height after construction at a construction site divided into a plurality of blocks, by minimizing a workload based on a length of a displacement vector from the each cut block to the each fill block under a predetermined limiting condition; and
a clustering step of performing clustering on the plurality of cut blocks into a first desired number of cut sections, and performing clustering on the plurality of fill blocks into a second desired number of fill sections, wherein
the clustering step includes

computing a degree of difference between cut blocks and a degree of difference between fill blocks by using a height before construction of the cut block and the fill block, and a soil transportation vector representing a soil transportation volume and a direction being cut from the cut block and filling the fill block, and
performing the clustering, based on the computed degree of difference.

**10.** A program causing a computer to execute:

a planning step of planning a soil transportation volume from each cut block of a plurality of cut blocks having a higher height before construction than a height after construction to each fill block of a plurality of fill blocks having a lower height before construction than a height after construction at a construction site divided into a plurality of blocks, by minimizing a workload based on a length of a displacement vector from the each cut block to the each fill block under a predetermined limiting condition; and
a clustering step of performing clustering on the plurality of cut blocks into a first desired number of cut sections, and performing clustering on the plurality of fill blocks into a second desired number of fill sections, wherein
the clustering step includes

computing a degree of difference between cut blocks and a degree of difference between fill blocks by using a height before construction of the cut block and the fill block, and a soil transportation vector representing a soil transportation volume and a direction being cut from the cut block and filling the fill block, and
performing the clustering, based on the computed degree of difference.

*FIG. 1*

CONSTRUCTION SECTION DIVISION DEVICE    1

CONTROLLER    2

PRESENT STATE
TOPOGRAPHIC
DATA ACQUISITOR    21

DESIGN
TOPOGRAPHIC
DATA ACQUISITOR    22

PLANNER    23

CLUSTERER    24

STORAGE    3

TOPOGRAPHY
DB    31

DESIGN DB    32

*FIG. 2*

# FIG. 3

```
┌──────────────────────────────────────────┐
│  CONSTRUCTION SECTION DIVISION PROCESSING  │
└──────────────────────────────────────────┘
                    │
                    ▼
        ┌──────────────────────────┐
        │ ACQUIRE PRESENT STATE TOPOGRAPHIC │
        │            DATA           │
        └──────────────────────────┘  S101
                    │
                    ▼
        ┌──────────────────────────┐
        │ ACQUIRE DESIGN TOPOGRAPHIC DATA │
        └──────────────────────────┘  S102
                    │
                    ▼
        ┌──────────────────────────┐
        │  ACQUIRE NUMBER OF CONSTRUCTION │
        │      SECTION DIVISIONS    │
        └──────────────────────────┘  S103
                    │
                    ▼
        ┌──────────────────────────┐
        │    PERFORM MESH DIVISION  │
        └──────────────────────────┘  S104
                    │
                    ▼
        ┌──────────────────────────┐
        │       GENERATE BLOCK      │
        └──────────────────────────┘  S105
                    │
                    ▼
        ┌──────────────────────────┐
        │ GENERATE SOIL TRANSPORTATION VECTOR │
        └──────────────────────────┘  S106
                    │
                    ▼
        ┌──────────────────────────┐
        │  COMPUTE DEGREE OF DIFFERENCE │
        └──────────────────────────┘  S107
                    │
                    ▼
        ┌──────────────────────────┐
        │ PERFORM CONSTRUCTION SECTION DIVISION │
        └──────────────────────────┘  S108
                    │
                    ▼
        ┌──────────────────────────┐
        │            END            │
        └──────────────────────────┘
```

## FIG. 4A

## FIG. 4B

| F | F | F | F | F | F | F | F | F | F |
|---|---|---|---|---|---|---|---|---|---|
| F | F | C | C | C | C | C | C | F | F |
| F | C | C | C | C | C | C | C | C | F |
| F | C | C | C | C | C | C | C | C | F |
| F | C | C | C | C | C | C | C | C | F |
| F | C | C | C | C | C | C | C | C | F |
| F | C | C | C | C | C | C | C | C | F |
| F | C | C | C | C | C | C | C | C | F |
| F | F | C | C | C | C | C | C | F | F |
| F | F | F | F | F | F | F | F | F | F |

## FIG. 5A

## FIG. 5B

*FIG. 6*

# FIG. 7A

CUT SECTION 1    CUT SECTION 2    FILL SECTION 1    FILL SECTION 2

$C_1$   $C_2$   $C_3$    $C_5$   $C_6$    $F_1$   $F_2$   $F_3$    $F_4$   $F_5$

# FIG. 7B

CUT
SECTION A

FILL
SECTION A

FILL
SECTION B

CUT
SECTION B

$F_1$  $F_2$  $F_3$  $F_4$  $F_5$

$C_1$  $C_2$  $C_3$

$F_6$  $C_4$  $C_5$  $C_6$  $C_7$  $C_8$  $F_7$

$F_8$  $C_9$  $C_{10}$  $C_{11}$  $C_{12}$  $C_{13}$  $F_9$

$F_{10}$  $C_{14}$  $C_{15}$  $C_{16}$  $C_{17}$  $C_{18}$  $F_{11}$

$C_{19}$  $C_{20}$  $C_{21}$

$F_{12}$  $F_{13}$  $F_{14}$  $F_{15}$  $F_{16}$

E

## INTERNATIONAL SEARCH REPORT

| International application No. |
| --- |
| **PCT/JP2023/015496** |

| A. | CLASSIFICATION OF SUBJECT MATTER |
| --- | --- |

*G06Q 50/08*(2012.01)i; *G06Q 10/04*(2023.01)i
FI:   G06Q50/08; G06Q10/04

According to International Patent Classification (IPC) or to both national classification and IPC

| B. | FIELDS SEARCHED |
| --- | --- |

Minimum documentation searched (classification system followed by classification symbols)

G06Q50/08; G06Q10/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-129923 A (JDC CORPORATION) 06 September 2022 (2022-09-06)<br>entire text, all drawings | 1-10 |
| A | JP 2022-148988 A (OKUMURA CORP.) 06 October 2022 (2022-10-06)<br>entire text, all drawings | 1-10 |
| A | JP 2022-148987 A (OKUMURA CORP.) 06 October 2022 (2022-10-06)<br>entire text, all drawings | 1-10 |
| A | JP 2021-149395 A (OKUMURA CORP.) 27 September 2021 (2021-09-27)<br>entire text, all drawings | 1-10 |
| A | JP 2022-11680 A (HITACHI, LTD.) 17 January 2022 (2022-01-17)<br>entire text, all drawings | 1-10 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 June 2023** | **18 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 700 690 A1

## INTERNATIONAL SEARCH REPORT
### Information on patent family members

International application No.

**PCT/JP2023/015496**

| Patent document cited in search report | | | Publication date (day/month/year) | Patent family member(s) | Publication date (day/month/year) |
|---|---|---|---|---|---|
| JP | 2022-129923 | A | 06 September 2022 | (Family: none) | |
| JP | 2022-148988 | A | 06 October 2022 | (Family: none) | |
| JP | 2022-148987 | A | 06 October 2022 | (Family: none) | |
| JP | 2021-149395 | A | 27 September 2021 | (Family: none) | |
| JP | 2022-11680 | A | 17 January 2022 | (Family: none) | |

Form PCT/ISA/210 (patent family annex) (January 2015)

## REFERENCES CITED IN THE DESCRIPTION

**Patent documents cited in the description**

- JP 2021101316 A